Europäisches Patentamt

European Patent Office

Office européen des brevets

(11) Veröffentlichungsnummer: **0 264 765 B1**

# EUROPÄISCHE PATENTSCHRIFT

(45) Veröffentlichungstag der Patentschrift: **29.05.91**

(51) Int. Cl.⁵: **H05B 39/04, H02M 7/538**

(21) Anmeldenummer: **87114876.3**

(22) Anmeldetag: **12.10.87**

(54) **Schaltungsanordnung zum Betrieb von Niedervolt-Halogenglühlampen.**

(30) Priorität: **15.10.86 DE 3635109**

(43) Veröffentlichungstag der Anmeldung:
**27.04.88 Patentblatt 88/17**

(45) Bekanntmachung des Hinweises auf die
Patenterteilung:
**29.05.91 Patentblatt 91/22**

(84) Benannte Vertragsstaaten:
**AT BE CH DE FR GB IT LI NL**

(56) Entgegenhaltungen:
**DE-A- 2 444 219**

(73) Patentinhaber: **Patent-Treuhand-Gesellschaft für elektrische Glühlampen mbH**
**Hellabrunner Strasse 1**
**W-8000 München 90(DE)**

(72) Erfinder: **Hirschmann, Walter**
**Fauststrasse 70**
**W-8000 München 82(DE)**

## Beschreibung

Die Erfindung betrifft eine Schaltungsanordnung zum Betrieb von Niedervolt-Halogenglühlampen mit Leistungsaufnahmen größer als 10 W gemäß dem Oberbegriff des Anspruchs 1.

Schaltungsanordnungen dieser Art zum Betrieb von 6, 12 oder 24 V-Halogenglühlampen an 220 V Wechselspannung sind aus der Literatur bekannt. Mit Hilfe einer solchen elektronischen Schaltungsanordnung, die oft als "elektronischer Trafo" bezeichnet wird, können die Niedervolt-Halogenglühlampen auch über eine Helligkeitsregelungsschaltung, kurz Dimmer genannt, betrieben werden. Hierbei zeigt sich jedoch, daß bei Verwendung von handelsüblichen Dimmern mit Phasenanschnittsteuerung die Schaltungsanordnung meist ein hartes Einschalten erfährt. Außerdem ergibt sich bei bestimmten Helligkeitsstufen ein flackernder oder flimmernder Betrieb für die Lampe.

Ziel der Erfindung ist es daher, eine Schaltungsanordnung zu schaffen, die an herkömmlichen Dimmer-Schaltern mit Phasenanschnittsteuerung eine optimalen Betrieb der Lampe, insbesondere auch bei niedrigen Helligkeitsstufen, und ein weiches periodisches Einschalten der Schaltungsanordnung durch den Dimmer gewährleisten. Dabei sollte es gleichgültig sein, ob die Last zwischen 10 und z.B. 100 W durch eine oder durch eine Parallelschaltung von mehreren Niedervolt-Halogenglühlampen gebildet wird.

Diese Aufgabe wird durch die kennzeichnenden Merkmale des Anspruchs 1 gelöst. Weitere vorteilhafte Ausgestaltungen der erfindungsgemäßen Schaltungsanordnung sind den Unteransprüchen zu entnehmen.

Durch die Einführung einer nicht stromkompensierten Drossel von mindestens 50 mH wird eine Verflachung des Betriebsspannungsanstieges für die Transistoren und den Transformator erreicht. Infolge des Beschleunigungsgliedes aus Kondensator und Widerstand schwingt der Halbbrückengenerator schon bei kleinen Spannungen an. Bei Betätigung des Dimmers läßt sich somit die Lichtstromabgabe der Lampe ohne Helligkeitssprünge regeln. Das Symmetrierungsglied aus den Kondensatoren und Widerständen sorgt beim erstmaligen sowie beim periodischen Startvorgang für eine Halbierung der Transistor-Versorgungsspannung und vermindert so die Einschaltströme der Transistoren.

Bei Verwendung eines Transformators ohne Luftspalt setzt die kontinuierliche Schwingung der Schaltung ohne Last aus. Die Gefahr einer Zerstörung der Schaltung bei Ausfall der Niedervolt-Halogenglühlampe wird somit ausgeschlossen. Mit Hilfe des Kondensators, der den Sekundärkreis des Transformators mit dem Plus-oder Minuspol des Netzgleichrichters verbindet, wird ein HF-Kurzschluß erzeugt. Störspannungen über den Transformator können somit gering gehalten werden.

Die Verbindung der Kühlkörper der beiden Transistoren mit dem Pluspol dient zur weiteren Funkentstörung der Schaltung, genause wie die beiden HF-Filterdrosseln oder stromkompensierten Drosseln in den Zuleitungen zwischen der nicht stromkompensierten Drossel und der Halbbrückenschaltung. Diese Maßnahmen sind insbesondere auch notwendig, damit die Schaltungsanordnung mit Kondensatoren kleiner Kapazität bestückt werden kann. Durch Verwendung solcher Kondensatoren wird eine sinusförmige Stromaufnahme für die Schaltungsanordnung bei Betrieb ohne Dimmer sichergestellt.

Die Schaltungsanordnung ist anhand des nachfolgenden Ausführungsbeispiels näher veranschaulicht.

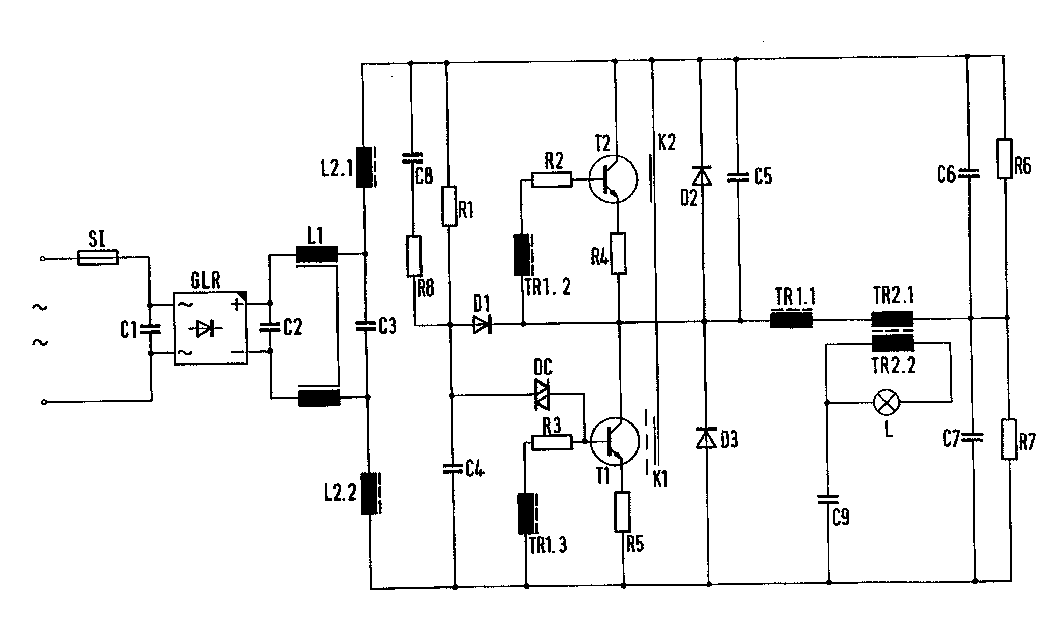

Figur 1 zeigt eine erfindungsgemäße Schaltungsanordnung zum Betrieb einer Niedervolt-Halogenglühlampe.

In Figur 1 ist das genaue Schaltbild einer Schaltungsanordnung zum Betrieb einer Niedervolt-Halogenglühlampe dargestellt. Parallel zu den Eingangsklemmen ist nach einer Sicherung SI zuerst ein Filterkondensator C1 und sodann ein Netzgleichrichter GLR geschaltet, wobei der Gleichstromausgang des Netzgleichrichters GLR durch einen weiteren Filterkondensator C2 überbrückt ist. Anschließend folgt eine nicht stromkompensierte Drossel L1 mit je einer Spule in jeder Gleichstromleitung sowie wiederum in Parallelschaltung ein Ladekondensator C3. Über je eine HF-Filterdrossel L2.1 bzw. L2.2 in jeder Zuleitung ist sodann eine selbstschwingende Halbbrückenschaltung angeschlossen.

Die Halbbrückenschaltung besteht aus den beiden Transistoren T1, T2 mit den Rückstromdioden D2, D3, den Widerständen R2 bis R5, dem Steuerübertrager und dem Anlaufschaltglied mit dem Widerstand R1, dem Startkondensator C4, dem Diac DC und der Diode D1 sowie dem Kondensator C5. Der Steuerübertrager arbeitet nach dem Rückkopplungsprinzip und setzt sich aus der Primärwicklung TR1.1 sowie den beiden Sekundärwicklungen TR1.2 und TR1.3 zusammen. Beide Transistoren T1, T2 besitzen Kühlkörper K1, K2, die in Reihe mit dem Pluspol des Netzgleichrichters GLR verbunden sind, wobei der Kühlkörper K1 des Transistors T1 gegenüber dem Gehäuse des Transistors T1 isoliert ist. Der Widerstand R1 des Anlaufschaltglieds ist außerdem zusätzlich durch ein Beschleunigungsglied aus einer Reihenschaltung eines Kondensators C8 und eines Widerstands R8 überbrückt.

Parallel zu den Schaltstrecken der beiden Transistoren T1, T2 ist ein Symmetrierungsglied aus zwei in Reihe liegenden Kondensatoren C6, C7 und zwei dazu parallelliegenden Widerständen R6, R7 geschaltet. In der Verbindung zwischen dem Mittenabgriff der beiden Transistoren T1, T2 und dem Mittenabgriff des

EP 0 264 765 B1

Symmetrierungsglieds liegt neben der Primärwicklung TR1.1 des Steuerübertragers auch die Primärwicklung TR2.1 des Lampentransformators. Die Sekundärwicklung TR2.2 des Lampentransformators ist direkt an die Stromzuführungen der Niedervolt-Halogenglühlampe L angeschlossen. Zusätzlich ist dieser Sekundärkreis aus Sekundärwicklung TR2.2 und Lampe L noch über einen Kondensator C9 mit dem Minuspol des Netzgleichrichters GLR verbunden.

Die Schaltungsanordnung eignet sich zum Betrieb der Niedervolt-Halogenglühlampe an einem externen Phasenanschnittdimmer, wobei bei Verwendung eines geeigneten Dimmers keine separate "Dimmervorlast" erforderlich ist. Zum Betrieb an einem solchen Dimmer sind die Eingangsklemmen der Schaltungsanordnung mit den Lampenanschlüssen am Ausgang des Dimmers zu verbinden. Gleichwohl kann die Schaltungsanordnung aber auch zum direkten Betrieb einer Niedervolt-Halogenglühlampe an Netzwechselspannung verwendet werden. Hierbei ist durch den Aufbau eine sinusförmige Netzstromaufnahme für die Schaltungsanordnung sichergestellt.

In der nachfolgenden Bestückungsliste sind die verwendeten Schaltungselemente für eine Schaltungsanordnung zum Betrieb einer 100 W-Niedervolt-Halogenglühlampe mit einer Betriebsspannung von 12 V zusammengestellt:

```
SI                    : 0,5 A M
C1, C2                : 0,1 µF
GLR                   : A0540
L1                    : nicht stromkompensierte
                        Drossel 60 mH
C3, C6, C7            : 0,22 µF
L2.1, L2.2            : Stabdrossel 47 µH
C8                    : 10 nF
R8                    : 3,3 kΩ
R1, R6, R7            : 220 kΩ
D1                    : 1N4004
C4                    : 22 nF
DC                    : N413M
R2, R3                : 2,2 Ω
R4, R5                : 0,27 Ω
T1, T2                : MJE 13007
TR1.1, TR1.2, TR1.3   : Typ EF16, 5/15 + 15 Windungen


D2, D3                : 1N4937
C5                    : 560 pF
TR2.1, TR2.2          : Typ E30/12, 76/9 Windungen
C9                    : 3,3 nF
```

Die Funktionsweise einer Halbbrückenschaltung kann dem Buch "Schaltnetzteile" von J. Wüstehube (Expert Verlag), S. 34 ff entnommen werden. In dem Buch "Elektronikschaltungen" von W. Hirschmann (Siemens AG), S. 147 ff ist die Anwendung von Halbbrückenschaltungen zum Betrieb von Lampen näher beschrieben. Auf die Funktionsweise eines solchen Schaltnetzteils soll daher hier nicht näher eingegangen werden.

3

Durch die verhältnismäßig große Induktivität der nicht stromkompensierten Drossel L1 wird bei Betrieb über den Dimmer trotz der periodisch steilen Dimmimpulse ein hartes Einschalten der Schaltungsanordnung verhindert. Gleichzeitig kann die Drossel, wenn sie, wie in der Figur 1 gezeigt, als Zweikammerdrossel ausgeführt ist, auch die Funkentstörung sowohl für Xals auch für Y-Störungen übernehmen. Ist die Induktivität der Drossel L1 ausreichend groß, dann bewirkt die in der Drossel L1 und den Kondensatoren C2, C3, C6, C7 gespeicherte Energie, daß die Schwingung im Bereich zwischen 0° und 135° durchschwingt, d.h. also auch während der netzspannungslosen Zeit nicht aussetzt und beim nächsten Anschnitt weich hochschwingt.

Das Beschleunigungsglied bestehend aus dem Kondensator C8 und dem Widerstand R8 überträgt den periodischen Einschaltimpuls vom Dimmer sofort über den Kondensator C4 und den Diac DC an die Basis des Transistors T1, welcher damit ohne Zeitverzögerung einschaltet. Ohne dieses Beschleunigungsglied würde die Zündzeitverzögerung zu große Werte annehmen und insbesondere im abgedimmten Zustand ein unruhiges Brennen der Lampe L hervorrufen. Außerdem würde die Schaltungsanordnung grundsätzlich bei jedem Einschaltimpuls bereits auf voller Betriebsgleichspannung liegen, was überhöhte Einschaltspitzenströme für die Transistoren T1 und T2 zur Folge haben kann und außerdem ein starkes Überschwingen der Versorgungsgleichspannung bewirkt.

Das als Spannungsteiler ausgeführte Symmetrierungsglied aus den Kondensatoren bzw. Widerständen C6, R6 und C7, R7 ist insbesondere für die Dimmung mit hohen Anschnittspannungen von Bedeutung. Bei der 90°-Dimmung ist die härteste Einschaltung für die Transistoren T1, T2 und den Transformator mit den Wicklungen TR2.1 und TR2.2 gegeben. Damit letzterer nicht einseitig in die Sättigung gesteuert wird, halbiert der Spannungsteiler die Halbwellen-Versorgungsspannung für den Transformator.

Das Aussetzen der Schwingung ohne Last wird bei der Schaltungsanordnung durch die hohe Induktivität und die damit verbundene sehr große Entladezeitkonstante bei einem Transformator ohne Luftspalt erreicht. Der verbleibende geringe "Verbraucherstrom" reicht nicht aus, um über die so stark verminderte Strom-Rückkopplung die Schwingung aufrechtzuerhalten. Die Schwingung wird somit erst wieder beim Zünden des Diac DC angestoßen, wobei dies mit einer weit niedrigeren Wiederholfrequenz, z.B. kleiner als 500 Hz erfolgt. Für die Wiederholfrequenz ist das Zeitglied R1, C4 bestimmend.

**Ansprüche**

1.  Schaltungsanordnung zum Betrieb von Niedervolt-Halogenglühlampen (L) mit Leistungsaufnahmen größer als 10 W, wobei die Schaltung folgende Merkmale aufweist:
    - einen an den Netzwechselstrom angeschlossenen Netzgleichrichter (GLR) mit parallel zum Gleichstromausgang geschaltetem Ladekondensator (C3) geringer Kapazität
    - eine parallel zum Ladekondensator (C3) angeschlossene selbstschwingende Halbbrückenschaltung mit zwei alternierend schaltenden Transistoren (T1, T2) und einen Anlaugschaltglied mit einem Widerstand (R1), einem Kondensator (C4), einem Diac (DC) und einer Diode (D1)
    - ein parallel zu den Schaltstrecken der Transistoren (T1, T2) angeschlossenes Symmetrierungsglied aus zwei in Reihe liegenden Kondensatoren (C6, C7) gleich großer Kapazitäten
    - einen Transformator, dessen Primärwicklung (TR 2.1) den Mittenabgriff zwischen den beiden Kondensatoren (C6, C7) des Symmetrierungsgliedes mit dem Mittenabgriff zwischen den beiden Transistoren (T1, T2) der Halbbrückenschaltung verbindet und an dessen Sekundärwicklung (TR 2.2) die beiden Stromzuführungen der Niedervolt-Halogenglühlampe (L) angeschlossen sind,
    dadurch gekennzeichnet, daß für einen dimmerfähigen Betrieb der Niedervolt-Halogenglühlampe (L) die Schaltungsanordnung zusätzlich folgende Merkmale aufweist:
    - eine zwischen den Gleichstromausgang des Netzgleichrichters (GLR) und den Ladekondensator (C3) geschaltete nicht stromkompensierte Drossel (L1) mit einer Induktivität von mindestens 50 mH
    - ein parallel zum Widerstand (R1) des Anlaufschaltgliedes angeschlossenes Beschleunigungsglied, bestehend aus einer Reihenschaltung eines Kondensators (C8) und eines Widerstandes (R8)
    - je einen gleich großen Widerstand (R6, R7) parallel zu den Kondensatoren (C6, C7) des Symmetrierungsgliedes

2.  Schaltungsanordnung nach Anspruch 1, dadurch gekennzeichnet, daß der Transformator mit den beiden Wicklungen (TR 2.1, TR 2.2) keinen Luftspalt aufweist.

3. Schaltungsanordnung nach Anspruch 1, dadurch gekennzeichnet, daß der Sekundärkreis des Transformators mit der Sekundärwicklung (TR 2.2) und der Niedervolt-Halogenglühlampe (L) über einen Kondensator (C9) mit dem Plus- oder Minuspol des Netzgleichrichters (GLR) verbunden ist.

4. Schaltungsanordnung nach Anspruch 1, dadurch gekennzeichnet, daß die Transistoren (T1, T2) der Halbbrückenschaltung Kühlkörper (K1, K2) aufweisen, die elektrisch in Reihe mit dem Pluspol des Netzgleichrichters (GLR) verbunden sind.

5. Schaltungsanordnung nach Anspruch 1, dadurch gekennzeichnet, daß zwischen die nicht stromkompensierte Drossel (L1) und die Halbbrückenschaltung in Reihe zum Ladekondensator (C3) in jede der beiden Zuleitungen eine HF-Filterdrossel (L2.1, L2.2) geschaltet ist.

6. Schaltungsanordnung nach Anspruch 1, dadurch gekennzeichnet, daß zwischen die nicht stromkompensierte Drossel und die Halbbrückenschaltung in Reihe zum Ladekondensator in jede der beiden Zuleitungen eine stromkompensierte Drossel geschaltet ist.


**Claims**

1. Circuit arrangement for operating low-voltage halogen incandescent lamps (L) with power consumptions of greater than 10 W, the circuit exhibiting the following features:
   - a mains rectifier (GLR) connected to the mains alternating current with charging capacitor (C3) of low capacitance which is connected in parallel with the direct-current output,
   - a self-oscillating half-bridge circuit, connected in parallel with the charging capacitor (C3), having two transistors (T1, T2) which switch alternatingly and a starting switching element having a resistor (R1), a capacitor (C4), a diac (DC) and a diode (D1),
   - a balancing element, connected in parallel with the switching paths of the transistors (T1, T2), of two series-connected capacitors (C6, C7) of equally large capacitances
   - a transformer, the primary winding (TR 2.1) of which connects the centre tap between the two capacitors (C6, C7) of the balancing element to the centre tap between the two transistors (T1, T2) of the half-bridge circuit and to the secondary winding (TR 2.2) of which the two current feeds of the low-voltage halogen incandescent lamp (L) are connected,
   characterized in that, for dimmer-capable operation of the low-voltage halogen incandescent lamp (L), the circuit arrangement additionally has the following features:
   - a reactor (L1), which is not current compensated, connected between the direct-current output of the mains rectifier (GLR) and the charging capacitor (C3), having an inductance of at least 50 mH,
   - an accelerating element connected in parallel with the resistor (R1) of the starting switching element, consisting of a series circuit of a capacitor (C8) and a resistor (R8),
   - one equally large resistor (R6, R7) each in parallel with the capacitors (C6, C7) of the balancing element.

2. Circuit arrangement according to Claim 1, characterized in that the transformer having the two windings (TR 2.1, TR 2.2) does not exhibit an air gap.

3. Circuit arrangement according to Claim 1, characterized in that the secondary circuit of the transformer having the secondary winding (TR 2.2) and the low-voltage halogen incandescent lamp (L) is connected via a capacitor (C9) to the positive or negative terminal of the mains rectifier (GLR).

4. Circuit arrangement according to Claim 1, characterized in that the transistors (T1, T2) of the half-bridge circuit exhibit heat sinks (K1, K2) which are electrically connected in series with the positive terminal of the mains rectifier (GLR).

5. Circuit arrangement according to Claim 1, characterized in that a HF filter choke (L2.1, L2.2) is connected into each of the two feed lines in series with the charging capacitor (C3) between the reactor (L1) which is not current compensated and the half-bridge circuit.

6. Circuit arrangement according to Claim 1, characterized in that a current-compensated reactor is connected into each of the two feed lines in series with the charging capacitor between the reactor

5

which is not current compensated and the half-bridge circuit.

**Revendications**

1. Montage pour faire fonctionner des lampes à halogène basse tension (L) à absorption de puissance supérieure à 10 W, le circuit présentant les caractéristiques suivantes :
   - un redresseur réseau (GLR) raccordé au courant alternatif du réseau et comportant un condensateur de charge (C3) de faible capacité, branché en parallèle avec la sortie à courant continu,
   - un circuit en pont à simple alternance et auto-oscillant, branché en parallèle avec le condensateur de charge (C3) et comportant deux transistors (T1,T2) commutant en alternance et un circuit d'enclenchement au démarrage comportant une résistance (R1), un condensateur (C4), un diac (DC) et une diode (D1),
   - un circuit de symétrisation branché en parallèle avec les sections de commutation des transistors (T1,T2) et constitué par deux condensateurs (C6,C7) branchés en série et possédant des capacités identiques,
   - un transformateur, dont l'enroulement primaire (TR 2.1) relie la prise médiane entre les deux condensateurs (C6,C7) du circuit de symétrisation à la prise médiane entre les deux transistors (T1,T2) du circuit en pont à simple alternance, et à l'enroulement secondaire (TR 2.2) duquel sont raccordées les deux alimentations en courant de la lampe à halogène basse tension (L),
   caractérisé par le fait que pour un fonctionnement, permettant une gradation, de la lampe à halogène basse tension (L), le montage présente en outre les caractéristiques suivantes :
   - une bobine d'arrêt (L1) non compensée en courant, branchée entre la sortie à courant continu du redresseur réseau (GLR) et le condensateur de charge (C3) et possédant une inductance égale à au moins 50 mH,
   - un circuit d'accélération branché en parallèle avec la résistance (R1) du circuit d'enclenchement au démarrage et constitué par un circuit série formé d'un condensateur (C8) et d'une résistance (R8),
   - des résistances identiques respectives (R6,R7) branchées en parallèle avec les condensateurs (C6,C7) du circuit de symétrisation.

2. Montage selon la revendication 1, caractérisé par le fait que le transformateur comportant les deux enroulements (TR 2.1, TR 2.2) ne comporte aucun entrefer.

3. Montage suivant la revendication 1, caractérisé par le fait que le circuit secondaire du transformateur est relié à l'enroulement secondaire (TR 2.2) et que la lampe à halogène basse tension (L) est reliée, par l'intermédiaire d'un condensateur (C9), au pôle positif ou au pôle négatif du redresseur réseau (GLR).

4. Montage suivant la revendication 1, caractérisé par le fait que les transistors (T1,T2) du circuit en pont à simple alternance possèdent des corps de refroidissement (K1,K2), qui sont raccordés électriquement en série avec le pôle positif du redresseur réseau (GLR).

5. Montage suivant la revendication 1, caractérisé par le fait qu'une bobine d'arrêt HF (L2.1, L2.2) est branchée entre la bobine d'arrêt (L1), non compensée en courant, et le circuit en pont à simple alternance, en série avec le condensateur de charge (C3) dans chacune des deux lignes d'alimentation.

6. Montage suivant la revendication 1, caractérisé par le fait qu'une bobine d'arrêt compensée en courant est branchée entre la bobine d'arrêt non compensée en courant et le circuit en pont à simple alternance, en série avec le condensateur de charge dans chacune des deux lignes d'alimentation.